# EUROPEAN PATENT APPLICATION

(11) **EP 2 472 912 A1**
(43) Date of publication of application: **04.07.2012**
(21) Application number: 10811591.6
(22) Date of filing: 15.06.2010
(51) Int. Cl.: H04W 4/02, H04W 36/08

(54) **MOVEMENT DETERMINATION DEVICE AND MOVEMENT DETERMINATION METHOD**

(30) Priority: 26.08.2009 JP 2009195569
(71) Applicant: NTT DoCoMo, Inc., Tokyo 100-6150 (JP)
(72) Inventor: HASHIMOTO Jun, Tokyo 100-6150 (JP); TAKAHASHI Makoto, Tokyo 100-6150 (JP)
(74) Representative: Beder, Jens
(86) International application number: PCT/JP2010/060123
(87) International publication number: WO 2011/024540

(57) **Abstract**

The present invention aims to provide a movement determination device that can perform movement determination of mobile communication terminals with higher accuracy and a movement determination method therefor. A mobile communication terminal includes a visiting area information acquisition unit that acquires visiting area information indicating the communication area that the mobile communication terminal is visiting, a storage unit that stores the visiting area information as a visiting area information history being a history of the communication area that the mobile communication terminal is visiting, a peripheral area count acquisition unit that acquires the number of the communication areas located at the periphery of the mobile communication terminal, a reference range specifying unit that specifies a reference range of the visiting area information history stored by storage means in accordance with the number of the peripheral areas, and a determination unit that determines whether the mobile communication terminal is moving or not by comparing the reference range of the visiting area information history with the visiting area information.

## Description

### Technical Field

The present invention relates to a movement determination device and a movement determination method for determining whether a mobile communication terminal that performs mobile communication by visiting any one of a plurality of communication areas and performing radio communication is moving or not.

### Background Art

In a cellular mobile communication system that performs radio connection between a plurality of base stations and mobile communication terminals, the mobile communication terminals performs so-called handover that is a process of switching base stations to connect along with the movement thereof.

Conventionally, a technique has been proposed that stores a fixed number of past handover destinations as a handover history and, when handover is newly performed, determines whether the mobile communication terminal is in a moving state or a steady state on the basis of whether the new handover destination is included in the handover history or not (see Patent Literature 1, for example).

### Citation List

### Patent Literature

[Patent Literature 1] Japanese Patent Application Laid-Open Publication No. 2000-209630.

### Summary of Invention

### Technical Problem

However, in the above-mentioned Patent Literature 1, the number of records in the handover history is fixed and uniform movement determination is performed. When the number of records in the handover history is fixed, for example, in a place where connectable base stations are densely located, the number of connectable base stations is larger than the number of records of the handover history. In this case, even though a mobile communication terminal is in a steady state, there is an occasion that a new handover destination is not included in the handover history and the mobile communication terminal is determined to be in a moving state. Conversely, for example, in a place where connectable base stations are scattered, the number of connectable base stations is smaller than the number of records of the handover history. In this case, even though a mobile communication terminal is in a moving state, there is an occasion that a new handover destination is included in the handover history and the mobile communication terminal is determined to be in a stationary state. In other words, in the above-described technique, it is not possible to perform movement determination of mobile communication terminals with higher accuracy. Accordingly, users of the mobile communication terminals, for example, cannot receive a pinpoint information-providing service in accordance with the accurate moving state of the users.

The present invention is made to solve the above-mentioned problems, and the object thereof is to provide a movement determination device that can perform movement determination of mobile communication terminals with higher accuracy and a movement determination method therefor.

### Solution to Problem

To achieve the above-mentioned object, a movement determination device according to the present invention determines whether a mobile communication terminal that performs mobile communication by visiting any one of a plurality of communication areas and performing radio communication is moving or not, and the movement determination device includes visiting area information acquisition means for acquiring visiting area information indicating the communication area that the mobile communication terminal is visiting, storage means for storing the visiting area information acquired by the visiting area information acquisition means as a visiting area information history being a history of the communication area that the mobile communication terminal is visiting, peripheral area count acquisition means for acquiring the number of peripheral areas indicating the number of the communication areas located at the periphery of the mobile communication terminal, reference range specifying means for specifying a reference range of the visiting area information history stored by the storage means in accordance with the number of the peripheral areas acquired by the peripheral area count acquisition means, and determination means for determining whether the mobile communication terminal is moving or not by comparing the visiting area information history stored by the storage means in the reference range specified by the reference range specifying means with the visiting area information acquired by the visiting area information acquisition means.

The movement determination device according to the present invention compares the communication area that the mobile communication terminal is visiting and, in the history of the communication areas that it visited in the past, the communication areas in the reference range in accordance with the number of communication areas located at the periphery, and determines whether the mobile communication terminal is moving or not.

In a region such as a downtown area where the number of communication areas located at the periphery is large, even when a mobile communication terminal is not moving, there is an occasion that the communication area that the mobile communication terminal is visiting switches to many communication areas located at the periphery. In the case that the number of communication areas located at the periphery is large, for example, the movement determination device increases the reference range of the history of the communication areas that the mobile communication terminal visited in the past to be compared, whereby the communication area that it is visiting currently corresponds to one of the communication areas that it visited in the past, making it possible to determine that the mobile communication terminal is not moving.

Conversely, in a region such as a suburb where the number of communication areas at the periphery is small, even when a mobile communication terminal is moving, there is an occasion that the communication area that the mobile communication terminal is visiting becomes less likely to switch to the communication areas located at the periphery. In the case that the number of communication areas located at the periphery is small, for example, the movement determination device reduces the reference range of the history of the communication areas that the mobile communication terminal visited in the past to be compared, whereby the communication area that it is visiting currently does not correspond to any one of the communication areas that it visited in the past, making it possible to determine that the mobile communication terminal is moving.

As described above, the movement determination device according to the present invention, by performing movement determination varying the reference range of the history on the basis of the number of communication areas located at the periphery, can perform movement determination of the mobile communication terminal with higher accuracy.

It is desirable that the visiting area information acquisition means acquires the visiting area information at regular time intervals. With this configuration, for example, the visiting area information acquisition means does not need to constantly acquire the visiting area information, and accordingly it is possible to perform movement determination while reducing power consumption.

It is desirable that the peripheral area count acquisition means acquires the number of the peripheral areas of each of the communication areas that satisfy certain communication quality. With this configuration, for example, compared to the case of including, as the peripheral areas, peripheral areas that do not satisfy certain radio wave quality, the possibility that the peripheral areas are communication areas capable of communicating with the mobile communication device becomes high, and the movement determination device can perform movement determination with higher accuracy.

It is desirable that the movement determination device further includes specific process execution means for executing a predetermined process, after determining whether the mobile communication terminal is moving or not by the determination means, in accordance with the determination result. Accordingly, for example, it is possible to provide a preferable service in accordance with whether the mobile communication terminal is moving or not.

It is desirable that the storage means, when storing the visiting area information as the visiting area information history, sets acquisition time when the visiting area information is acquired by the visiting area information acquisition means as visiting area information acquisition time and, when the visiting area information is not included in the visiting area information history, further stores therein the visiting area information and the visiting area information acquisition time and, when the visiting area information is included in the visiting area information history, updates acquisition time of the corresponding visiting area information included in the visiting area information history with the visiting area information acquisition time, and the reference range specifying means, based also on an interval of acquisition time of the visiting area information included in the visiting area information history, specifies the reference range of the visiting area information history stored by the storage means. With this configuration, by including the acquisition time as the visiting area information history, the movement determination device can add, not only locations of the past visiting area information, but also time when the mobile communication terminal was at the locations to information for making a decision, and thus it is possible to perform movement determination with higher accuracy.

It is desirable that the storage means, when storing the visiting area information as the visiting area information history, further stores therein the number of storage times for each of the communication areas indicated by the visiting area information, and the determination means extracts, out of the visiting area information included in the visiting area information history stored by the storage means in the reference range specified by the reference range specifying means, visiting area information in which the number of storage times that exceeds a predetermined ratio when compared with the number of storage times of whole of the visiting area information, and further determines that the mobile communication terminal is present at a location based on the visiting area information thus extracted. For example, rather than at a location based on all of the visiting area information included in the visiting area information history, out of the visiting area information included in the visiting area information history, at the location based on the visiting area information in which the number of storage times exceeds the predetermined ratio when compared with the number of storage times of the whole of the visiting area information, there is a high possibility that the mobile communication terminal is present. In other words, with this configuration, the movement determination device can determine an approximate location of the mobile communication terminal in addition to the movement determination.

It is desirable that the storage means further stores therein the number of peripheral areas acquired by the peripheral area count acquisition means as a peripheral area count history that is a history of the number of the communication areas located at the periphery of the mobile communication terminal, and the reference range specifying means, in accordance with the peripheral area count history, specifies the reference range of the visiting area information history stored by the storage means. With this configuration, than the case of specifying the reference range from the single number of peripheral areas, the movement determination device can perform movement determination with higher accuracy.

Incidentally, the present invention, other than being described as an invention of the movement determination device as described above, can be described as an invention of a movement determination method as described below. This differs only in category and is substantially the same invention, and thus provides the same action and effect.

More specifically, the movement determination method according to the present invention is a method for determining whether a mobile communication terminal that performs mobile communication by visiting any one of a plurality of communication areas and performing radio communication is moving or not, and the movement determination method includes a visiting area information acquisition step of acquiring visiting area information indicating the communication area that the mobile communication terminal is visiting, a storage step of storing the visiting area information acquired at the visiting area information acquisition step as a visiting area information history being a history of the communication area that the mobile communication terminal is visiting, a peripheral area count acquisition step of acquiring the number of peripheral areas indicating the number of the communication areas located at the periphery of the mobile communication terminal, a reference range specifying step of specifying a reference range of the visiting area information history stored at the storage step in accordance with the number of the peripheral areas acquired at the peripheral area count acquisition step, and a determination step of determining whether the mobile communication terminal is moving or not by comparing the visiting area information history stored at the storage step in the reference range specified at the reference range specifying step with the visiting area information acquired at the visiting area information acquisition step.

### Advantageous Effects of Invention

According to the present invention, by performing movement determination varying the reference range of the history on the basis of the number of the communication areas located at the periphery, it becomes possible to perform the movement determination of the mobile communication terminal with higher accuracy.

### Brief Description of Drawings

[FIG. 1] FIG. 1 is a diagram illustrating a relationship between sectors and a mobile communication terminal.
[FIG. 2] FIG. 2 is a diagram of sectors in a movement path.
[FIG. 3] FIG. 3 includes diagrams depicting transition of visiting areas of the mobile communication terminal during standby in a region where peripheral sectors are densely located.
[FIG. 4] FIG. 4 includes diagrams depicting transition of visiting areas of the mobile communication terminal during standby in a region where peripheral sectors are scattered.
[FIG. 5] FIG. 5 is a diagram illustrating a structure of a movement determination device according to an embodiment of the present invention.
[FIG. 6] FIG. 6 is a table illustrating an example of a visiting area information history stored in a storage unit.
[FIG. 7] FIG. 7 is a table illustrating an example of a peripheral area count history stored in the storage unit.
[FIG. 8] FIG. 8 is a diagram illustrating a hardware structure of the mobile communication terminal according to the embodiment of the present invention.
[FIG. 9] FIG. 9 is a flowchart illustrating a procedure (movement determination method) performed in the movement determination device according to the embodiment of the present invention.
[FIG. 10] FIG. 10 is a diagram illustrating an example of the procedure (movement determination method) performed in the movement determination device according to the embodiment of the present invention on a time-series basis.

### Description of Embodiments

A preferable embodiment of a movement determination device and a movement determination method according to the present invention will be described in detail hereinafter with reference to the drawings. It should be noted that like reference signs are given to like elements in the description of the drawings, and redundant explanations are omitted.

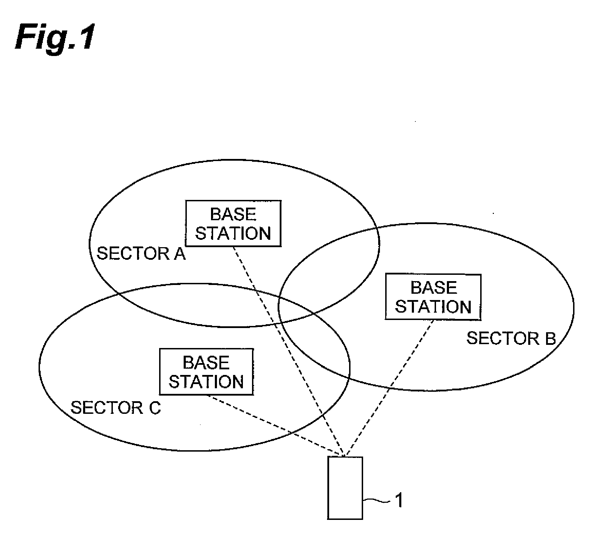

FIG. 1 is a diagram exemplifying a mechanism in which a mobile communication terminal 1 performing mobile communication performs radio communication. Base stations form communication areas in which radio communication can be performed and, when the mobile communication terminal 1 is visiting the communication areas, the mobile communication terminal 1 can perform radio communication with the base stations forming the communication areas. Examples of the communication areas include sectors or cells. Examples of a mobile communication system in which sectors constitute communication areas in this manner include a Long Term Evolution (LTE). In the present embodiment, the communication areas are assumed to be sectors, hereinafter. Because the range of a sector that a base station forms is limited, by arranging a plurality of base stations, the mobile communication terminal 1 can perform radio communication even when it is moving.

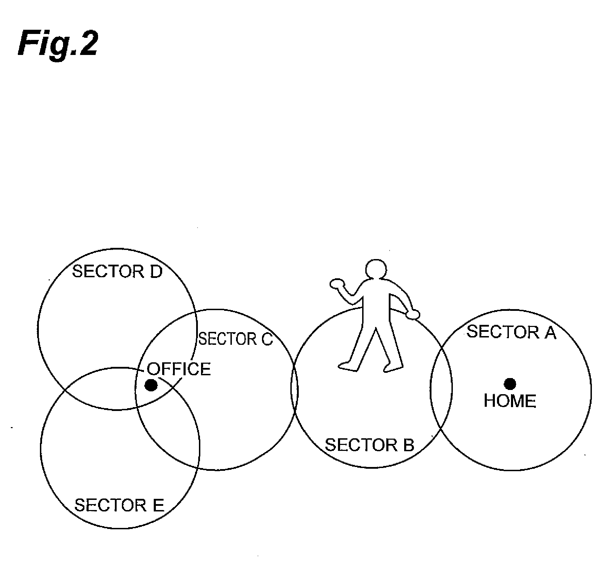

FIG. 2 illustrates an example of sectors (visiting area sectors) that a person carrying the mobile communication terminal 1 visit from his/her home to the office. Initially, when the person is at home, the mobile communication terminal 1 is in a sector A. Next, until reaching the office, the mobile communication terminal 1 is in a sector B and a sector C in order. While being at the office, the mobile communication terminal 1 is considered to be in any one of the sector C, a sector D, or a sector E. In this manner, when the mobile communication terminal 1 is present in a plurality of sectors, it is considered to be in any one of these sectors.

When the mobile communication terminal 1 is present at a plurality of sectors, which sector it is considered to be visiting will be explained hereinafter. The mobile communication terminal 1 that is visiting any one of the sectors and is on standby (idle state) acquires from a visiting area sector announcement information that includes information indicating the visiting area sector (visiting area information) and information indicating peripheral sectors that are one or more sectors located at the periphery of the mobile communication terminal 1 and are candidate sectors that are possibly visited next (peripheral information). More specifically, the visiting area information includes information such as scrambling codes being IDs of sectors and sector names.

In the present embodiment, the visiting area information is assumed to be sector names of visiting area sectors. The peripheral information is specifically an aggregate of information of each peripheral sector including scrambling codes being Is of sectors and sector names. In the present embodiment, the peripheral information is assumed to be an aggregate of sector names of visiting area sectors. The mobile communication terminal 1, based on the announcement information, constantly monitors a reception level (RSCP) and reception quality (Ec/NO) each being communication quality (reception condition) of each visiting area sector and peripheral sector, and periodically reports the result (as a measurement report) to the base station side. When the reception quality of the sector that the mobile communication terminal 1 is visiting becomes worse, the base station side informs the mobile communication terminal 1 of one sector having the best communication quality on the basis of the measurement report reported by the mobile communication terminal 1, and the mobile communication terminal 1 registers the sector as a visiting area sector suitable for standby (active sector). Every time sectors having good communication quality change, the visiting area sectors are changed.

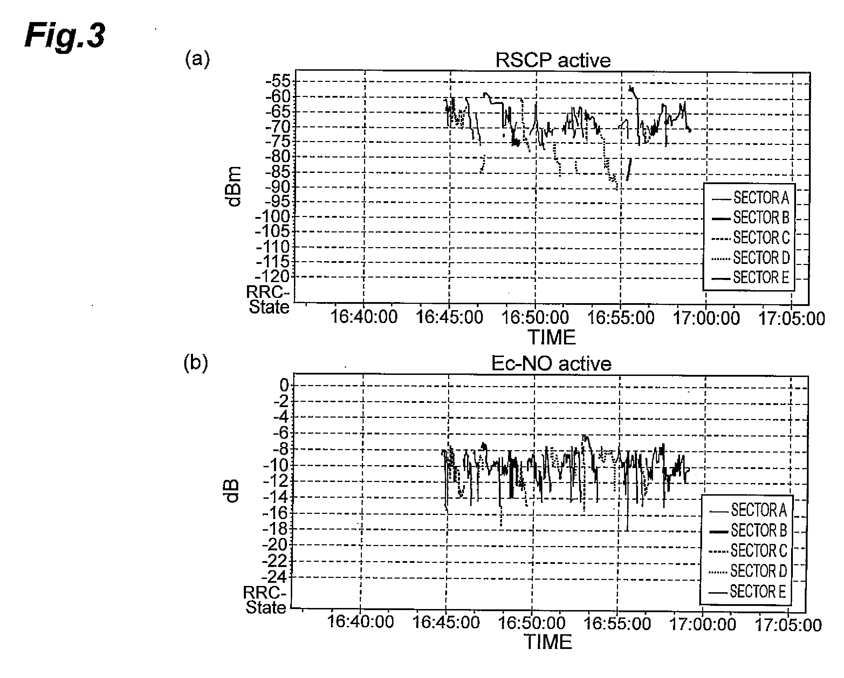

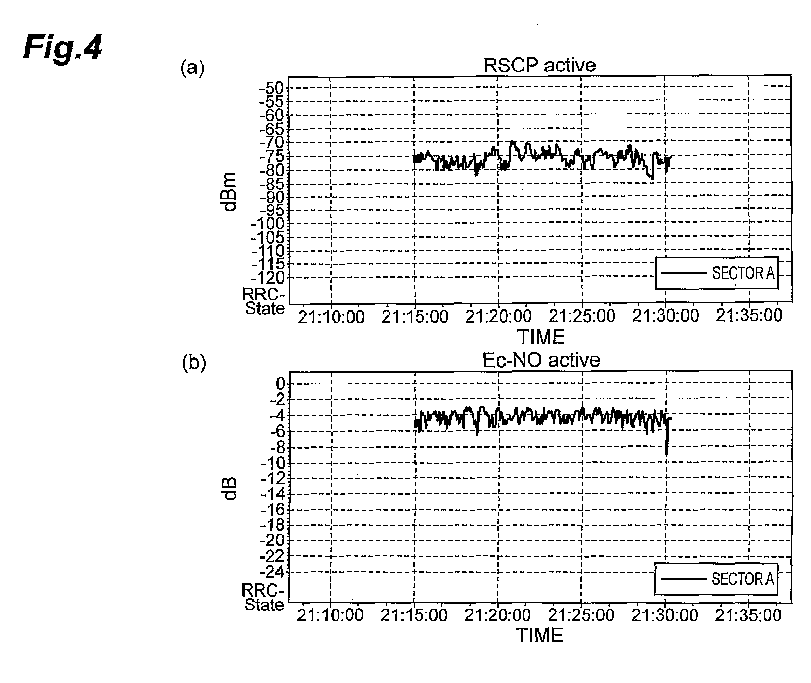

FIG. 3 and FIG. 4 illustrate examples of time-series transition of visiting area sectors of the mobile communication terminal 1 during standby in a state of not moving. Regarding (a) and (b) of each of FIG. 3 and FIG. 4, (a) depicts transition of a reception level of a radio wave (the unit is dBm) of visiting area sectors, and (b) depicts transition of reception quality of the radio wave (the unit is dBm) of the visiting area sectors. FIG. 3 is an example of the case in which there are five sectors (sector A, sector B, sector C, sector D, and sector E) located at the periphery of the mobile communication terminal 1. It can be seen that the visiting area sector switches to any one of five sectors along with time. In other words, it can be seen from these diagrams that when there are a plurality of peripheral sectors, even in a state of the mobile communication terminal 1 not moving, along with transition of the communication quality, changes of the visiting area sectors occur. Subsequently, FIG. 4 is an example of the case in which there is only one sector located at the periphery of the mobile communication terminal 1, and it can be seen that the visiting area sector is not changed because peripheral sectors do not exist and, even as time passes, the visiting area sector is always single.

Some examples of the mobile communication terminal 1 have a function of periodically and automatically measuring location information thereof and informing a service provider of it. By using this function, it becomes possible, for example, to realize an application for supplying a service of delivering pinpoint weather information, town event information, and the like via push technology, action support service of announcing the last train information of the nearest station, or other services based on the location information of the mobile communication terminal 1.

Herein, as described above, even in a state of the mobile communication terminal 1 not moving, under the condition in which there are a plurality of peripheral sectors, the visiting area sector having a good communication quality for the mobile communication terminal 1 frequently changes by times (the sector fluctuates), and accordingly the visiting area sector is changed even when the mobile communication terminal 1 is not moving. Hereinafter, the mobile communication terminal 1 not moving is referred to as the mobile communication terminal 1 being stationary. The state of the mobile communication terminal 1 being stationary, from the view point of the above-described function, means the case in which it is moving slightly (several square meters, for example), and includes the case in which it can be considered to be at approximately the same position. The movement determination device, in view of the above-described background, performs highly accurate determination of movement or stationariness further corresponding to real moving situation of users.

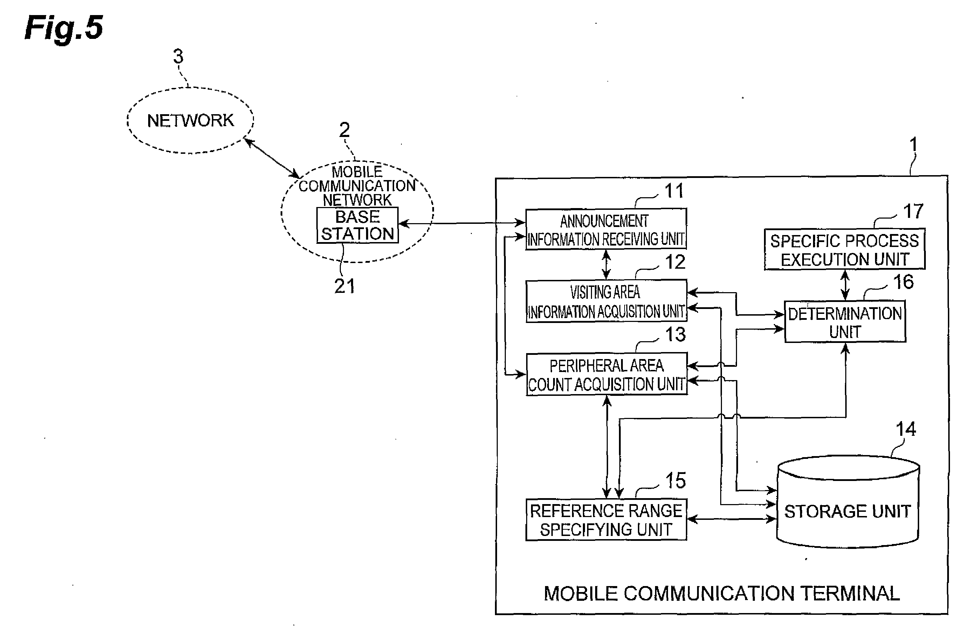

Here, FIG. 5 illustrates a structure of the mobile communication terminal 1 being the movement determination device according to the present embodiment. The movement determination device is a device that determines whether the mobile communication terminal 1 is moving or not. The mobile communication terminal 1 communicates with a base station 21 by radio communication, and communicates with a mobile communication network 2 via the base station 21. In addition, the mobile communication network 2 connects with a network 3 composed of the Internet, a telephone communication network, or the like. In other words, the mobile communication terminal 1 can connect with the network 3 via the base station. Herein, the mobile communication terminal 1 is structured with a visiting area information acquisition unit 12, a peripheral area count acquisition unit 13, a reference range specifying unit 15, a determination unit 16, a storage unit 14, an announcement information receiving unit 11, and a specific process execution unit 17.

The announcement information receiving unit 11 is one function of a radio communication unit described later and receives announcement information that the base station 21 constantly transmits within its sector. The announcement information receiving unit 11 then retains visiting area information included in the announcement information. The announcement information receiving unit 11 also retains peripheral information included in the announcement information. In addition, the announcement information receiving unit 11, based on the peripheral information included in the announcement information, acquires a reception level and reception quality as communication quality of each peripheral area, and retains information indicating the communication quality in association with each peripheral area.

The visiting area information acquisition unit 12 is visiting area information acquisition means for acquiring visiting area information indicating a sector that the mobile communication terminal 1 is visiting. The visiting area information acquisition unit 12 acquires the visiting area information from the announcement information receiving unit 11. The visiting area information acquisition unit 12, when receiving new visiting area information, outputs this visiting area information to the storage unit 14. The visiting area information acquisition unit 12 also outputs the visiting area information to the determination unit 16.

The visiting area information acquisition unit 12 may acquire the visiting area information at regular time intervals. When the movement determination device determines movement of the mobile communication terminal 1, the visiting area information acquisition unit 12 needs to continue to constantly monitor the visiting area information (that the announcement information receiving unit 11 being one function of the radio communication unit retains). For example, because one that constructs the visiting area information acquisition unit 12 is a CPU of an application (application CPU) using the movement determination, power consumption matters. The visiting area information acquisition unit 12, by acquiring the visiting area information from the announcement information receiving unit 11 at regular time intervals, can reduce the power consumption attributed to continuing the monitoring. For example, the visiting area information acquisition unit 12 may acquire the visiting area information from the announcement information receiving unit 11 periodically at five-minute intervals. The reduction effect on the power consumption in this case will be described below. When it is assumed to take 0.1 seconds to acquire the visiting area information, the case of acquiring the visiting area information constantly requires consumption current for 86,400 seconds per day, but the case of acquiring the visiting area information at five-minute intervals requires consumption current for only 28.8 seconds per day, and accordingly it is possible to reduce the consumption current to about 0.03%. However, the visiting area information acquisition unit 12 may acquire the visiting area information at any timing instead of at regular time intervals.

In addition, the visiting area information acquisition unit 12, when acquiring the visiting area information from the announcement information receiving unit 11, can further acquire visiting area information acquisition time that is acquisition time acquired as time during which the mobile communication terminal 1 is visiting the area from the announcement information receiving unit 11, and use it as an input. In the same way as for the visiting area information, the visiting area information acquisition unit 12 outputs the visiting area information acquisition time to the storage unit 14. The visiting area information acquisition unit 12 also outputs the visiting area information acquisition time to the determination unit 16.

The peripheral area count acquisition unit 13 is peripheral sector count acquisition means for acquiring the number of peripheral sectors that indicate communication areas located at the periphery of the mobile communication terminal 1. The peripheral area count acquisition unit 13 acquires the peripheral information from the announcement information receiving unit 11. The peripheral area count acquisition unit 13, from the peripheral information thus acquired, acquires the number of peripheral sectors (peripheral sector count) constituting the peripheral information by counting. When the peripheral area count acquisition unit 13 acquires a new peripheral sector count, it outputs the peripheral sector count to the storage unit 14. The peripheral area count acquisition unit 13 also outputs the peripheral sector count to the reference range specifying unit 15.

In addition, the peripheral area count acquisition unit 13, for example, at timing when the visiting area information acquisition unit acquires the visiting area information from the announcement information receiving unit 11, inputs the peripheral information from the announcement information receiving unit 11, and a reception level and reception quality as communication quality of each peripheral sector constituting the peripheral information. The peripheral area count acquisition unit 13 may acquire the number of peripheral sectors that satisfy a certain communication quality. Such a peripheral sector count is referred to as a "sector count the mobile communication terminal 1 sees", hereinafter. More specifically, the peripheral area count acquisition unit 13, from the peripheral information acquired from the announcement information receiving unit 11 and also the reception level and the reception quality as communication quality of each peripheral area, extracts only peripheral information having a reception level and reception quality that are set and stored in advance, and retains the number of the peripheral information thus extracted as the sector count the mobile communication terminal 1 sees. For example, the peripheral information announced in the announcement information is assumed to include a sector B, a sector C, a sector D, and a sector F. The peripheral area count acquisition unit 13, as a result of the extraction in accordance with the communication quality, is assumed to have extracted the sector B and the sector F. In this case, although the peripheral information includes four of the sector B, the sector C, the sector D, and the sector F, the sector count the mobile communication terminal 1 sees is two of the sector B and the sector F. The sector count the mobile communication terminal 1 sees is referred to as the peripheral area count, hereinafter.

By setting only sectors that satisfy a certain communication quality to the peripheral sectors as described above, it is possible to make the sectors to be considered as the peripheral sectors appropriate ones, making it possible to perform movement determination with higher accuracy. Instead of based on the announcement information, it is acceptable to form peripheral information on the basis of radio waves of peripheral sectors (announcement information) that the mobile communication terminal receives and acquire it.

The storage unit 14 is storage means for storing the visiting area information acquired by the visiting area information acquisition unit 12 as a visiting area information history being a history of communication areas that the mobile communication terminal 1 visits. The storage unit 14 receives the visiting area information from the visiting area information acquisition unit 12. The storage unit 14 retains the visiting area information thus received, and stores it as a visiting area information history. The visiting area information history stored by the storage unit 14 is referred by the reference range specifying unit 15. It should be noted that the timing when the storage unit 14 stores the visiting area information acquired by the visiting area information acquisition unit 12 as the visiting area information history is after movement determination of the mobile communication terminal 1 is performed with this visiting area information (in other words, the visiting area information itself acquired by the visiting area information acquisition unit 12 is not used for movement determination of the mobile communication terminal 1 as a visiting area information history).

Into the storage unit 14, simultaneously when the visiting area information is input from the visiting area information acquisition unit 12, the visiting area information acquisition time may be input from the visiting area information acquisition unit 12. In addition, when visiting area information indicating the same sector as those of the visiting area information input is not included in the visiting area information history, the storage unit 14 newly stores therein the visiting area information acquisition time input together with the visiting area information input. Conversely, when visiting area information indicating the same sector as those of the visiting area information input is included in the visiting area information history, the storage unit 14 may update the acquisition time of the corresponding visiting area information included in the visiting area information history with the visiting area information acquisition time input and store it therein.

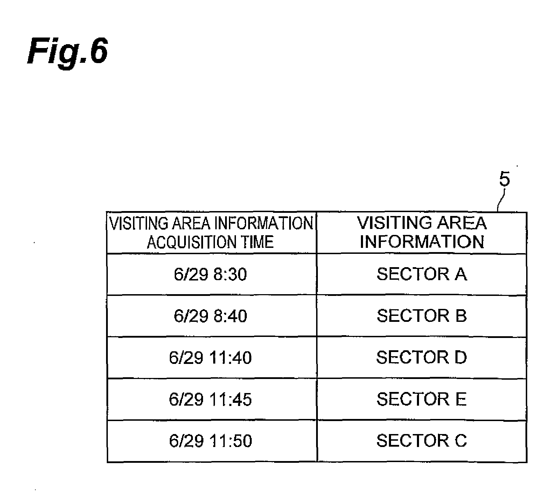

FIG. 6 illustrates one example of the visiting area information history that the storage unit 14 stores therein. In FIG. 6, the visiting area information acquisition time and the visiting area information are stored in association with each other. The order that the storage unit 14 stores therein the visiting area information history may be the order of the visiting area information acquisition time, or may be another order. When the storage unit 14 stores therein the visiting area information history, after the number of pieces of the visiting area information included in the visiting area information history reaches the number that is set and stored in advance, it is acceptable to delete the oldest visiting area information and store new visiting area information so that pieces of visiting area information of equal to or more than the number set and stored in advance are not stored. Alternatively, based on the visiting area information acquisition time, it is acceptable to store only visiting area information in the past two hours. Herein, for example, in the state depicted in FIG. 6, the storage unit 14, when further registering a set of the visiting area information acquisition time of "June 30 15:15" and the visiting area information of the "sector B", updates only the visiting area information acquisition time out of a set of the visiting area information acquisition time of "June 29 8:40" and the visiting area information in the "sector B" that are already included in FIG. 6 with "June 30 15:15".

In addition, the storage unit 14, when storing therein the visiting area information as the visiting area information history, may further store therein the number of storage update times thereof. When the storage unit 14 stores therein the visiting area information initially input, sets the number of storage update times to zero and, in the visiting area information subsequently input, when the storage unit 14 updates and stores therein visiting area information indicating the same communication area as that of the visiting area information initially input described above, updates the number of storage update times into one. Subsequently, every time the storage unit 14 updates and stores, one is added to the number of storage update times.

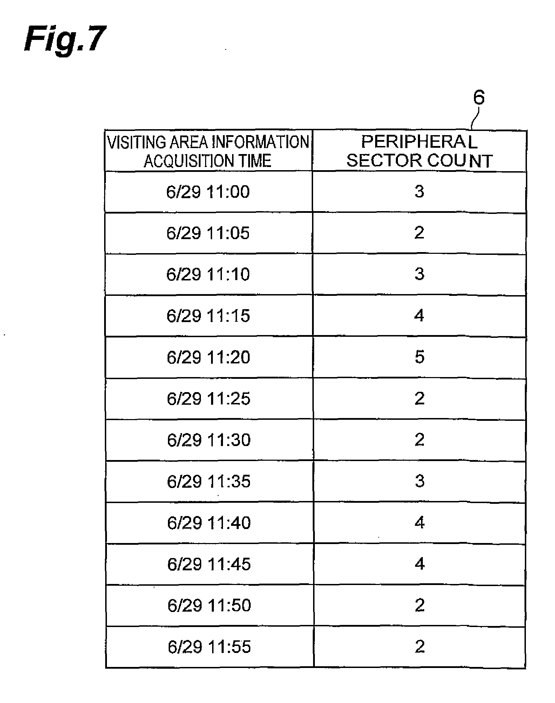

In addition, the storage unit 14 may further store therein the peripheral area count acquired by the peripheral area count acquisition unit 13 as a peripheral area count history that is a history of the number of communication areas located at the periphery of the mobile communication terminal. FIG. 7 illustrates one example of the peripheral area count history. In FIG. 7, together with the visiting area information acquisition time, the peripheral sector count that was acquired simultaneously when acquiring the visiting area information is stored as the peripheral sector count history. In FIG. 7, the visiting area information is acquired at five-minute intervals, and the peripheral sector count at each acquisition is stored together with the visiting area information acquisition time on a time-series basis.

The reference range identification unit 15 is reference range specifying means for, in accordance with the number of peripheral sectors acquired by the peripheral area count acquisition unit 13, specifying a reference range of the visiting area information history stored by the storage unit 14. The reference range specifying unit 15 uses two inputs. The reference range specifying unit 15 uses the peripheral area count from the peripheral area count acquisition unit 13 as the first input. The reference range specifying unit 15 uses the visiting area information history from the storage unit 14 as the second input.

The reference range is, as information for making a decision when the determination unit 16 performs movement determination of the mobile communication terminal 1, for determining which range of the visiting area information history should be compared with the visiting area information acquired at the present time. As described later, the determination unit 16, in order to determine whether the mobile communication terminal 1 is moving or not, compares the visiting area information to be compared (at the present time) with visiting area information that is traced back in time from the point when the visiting area information is acquired (visiting area information history).

More specifically, the reference range specifying unit 15 specifies the above-described reference range as follows. For example, as described below, the reference range specifying unit 15, in accordance with the interval of acquisition time of the visiting area information included in the visiting area information history, may specify the reference range of the visiting area information history stored by the storage unit 14. Here, the peripheral area count of the first input is assumed to be *N* and, when the visiting area information acquisition unit 12 acquires the visiting area information at regular time intervals, the regular time interval is assumed to be *m* minutes. For example, the reference range specifying unit 15, out of elements included in the visiting area information history being the second input, specifies elements in the range from the present time to the past *N*×*m* minutes as the reference range.

Referring to FIG. 6, one example in which the reference range specifying unit 15 specifies the reference range will be described. Assuming that the regular time interval at which the visiting area information acquisition unit 12 acquires the visiting area information is five minutes, i.e., *m* is five, the visiting area information history at the present time of 12:00, June 29 is in the state depicted in FIG. 6, and the peripheral area count at the present time of 12:00, June 29 is three, i.e., *N* is three, the reference range specifying unit 15, out of elements included in the visiting area information history, specifies elements in the range for the past 15 minutes (=3×5), i.e., elements in the range from 11:45 to 12:00, June 29, specifically the elements including the sector E and the sector C as the reference range. The reference range specifying unit 15 outputs information indicating the reference range thus specified to the determination unit 16.

Alternatively, as still another example of the specifying method of the reference range by the reference range specifying unit 15, it is acceptable to determine a criterion value of the peripheral sector count in advance and, if the peripheral sector count at the time of visiting area information acquisition is smaller than the criterion value, set the reference range to a past predetermined minute range for below-the-criterion and, if it is equal to or larger than the criterion value, set the reference range to a past predetermined minute range for above-the-criterion (these pieces of information are stored in the reference range specifying unit 15 in advance). For example, assuming that the criterion value of the peripheral sector count is five, if the peripheral sector count at the time of the visiting area information acquisition is two, because it is smaller than the criterion value, the reference range is set to 30 minutes being the predetermined range for below-the-criterion and, if the peripheral sector count at the time of visiting area information acquisition is eight, because it is larger than the criterion value, the reference range is set to 60 minutes being the predetermined range for beyond-the-criterion.

Furthermore, the reference range specifying unit 15 may refer to the peripheral area count history stored in the storage unit 14 and, in accordance with the peripheral area count history, specify the reference range of the visiting area information history stored by the storage unit 14. For example, the average of peripheral area counts for the past one hour included in the peripheral area count history is calculated, and the resulting average is set as *N* described above. One example of this specifying the reference range will be described referring to FIG. 7. In the same way as described above, assuming that the regular time interval at which the visiting area information acquisition unit 12 acquires the visiting area information is five minutes, i.e., *m* is five, and the visiting area information history at the present time of 12:00, June 29 is in the state depicted in FIG. 6, *N* will be three obtained from the average of 3, 2, 3, 4, 5, 2, 2, 3, 4, 4, 2, and 2 that are peripheral area counts for the past one hour, and then the reference range specifying unit 15, out of elements included in the visiting area information history, specifies elements for the past 15 minutes (=3×5), i.e., elements in the range from 11:45 to 12:00, June 29, specifically the elements including the sector E and the sector C as the reference range. It should be noted that even if the reference range is varied, the calculation range of the average may be fixed (in the above-described case, the past one hour range).

As one example of the specifying method of the reference range by the reference range specifying unit 15, it is acceptable to determine a criterion value of the average of the past peripheral sector counts in advance and, if the average of the past peripheral sector counts at the time of the visiting area information acquisition is smaller than the criterion value, set the reference range to a past predetermined minute range for below-the-criterion and, if it is equal to or larger than the criterion value, set the reference range to a past predetermined minute range for above-the-criterion (these pieces of information are stored in the reference range specifying unit 15 in advance). For example, assuming that the criterion value of the average of the past peripheral sector counts is five, if the average of the past peripheral sector counts at the time of the visiting area information acquisition is three, because it is smaller than the criterion value, the reference range is set to 20 minutes being the predetermined range for below-the-criterion and, if the average of the past peripheral sector counts at the time of the visiting area information acquisition is nine, because it is larger than the criterion value, the reference range is set to 50 minutes being the predetermined range for above-the-criterion.

As one example of the specifying method of the reference range by the reference range specifying unit 15, it is acceptable to use a forgetting factor and strongly reflect the peripheral sector count at time close to the present time to the calculation result. Assuming that the forgetting factor is 0.5, the average of the past peripheral sector counts is assumed to be ΣA(n)×(0.5)^{Λn}. Herein, A(n) represents, out of the peripheral area count history, the peripheral sector count in the past (n-1) times before. Accordingly, the observed value at the time close to the present state will be strongly reflected to the calculation result, whereby it becomes possible to quickly identify a stationary state. By using information of a plurality of peripheral area counts in the past as described above, compared to the case of specifying the reference range from a single peripheral area count, it is possible to perform movement determination with high accuracy.

The determination unit 16 is determination means for determining whether the mobile communication terminal 1 is moving or not by comparing the visiting area information history stored by the storage unit 14 in the reference range specified by the reference range specifying unit 15 with the visiting area information acquired by the visiting area information acquisition unit 12. The determination unit 16 uses two inputs. The determination unit 16 uses the reference range from the reference range specifying unit 15 as the first input. The determination unit 16 uses the visiting area information from the visiting area information acquisition unit 12 as the second input. The determination unit 16, when a communication area that the visiting area information being the second input indicates matches a communication area that any one of pieces of the visiting area information included in the reference range being the first input indicates, determines that the mobile communication terminal 1 is stationary. Conversely, when they do not match, the determination unit 16 determines that the mobile communication terminal 1 is moving. The determination result is output to the specific process execution unit 17.

Referring to FIG. 6, one example in which the determination unit 16 determines will be described. Assuming that the determination unit 16 performs determination in the state of the visiting area information history depicted in FIG. 6, it is assumed that the visiting area information at this point is in the sector D, and the reference range consists of the sector C, the sector E, the sector D, and the sector B. Because the sector D for the visiting area information is included in the reference range, the determination unit 16 determines that the mobile communication terminal 1 is stationary. Conversely, assuming that the visiting area information at this point is in the sector A and the reference range is the same as described above, because the sector A for the visiting area information is not included in the reference range, the determination unit 16 determines that the mobile communication terminal 1 is moving.

The determination unit 16 may, out of the visiting area information included in the visiting area information history stored by the storage unit 14 in the reference range specified by the reference range specifying unit 15, extract pieces of visiting area information having the number of storage times that exceeds a predetermined ratio when compared with the number of storage times of the whole of the visiting area information, and further determine that the mobile communication terminal is present at the location based on the pieces of visiting area information thus extracted. For example, take the average of the numbers of storage update times of pieces of visiting area information included in the visiting area information history, extract pieces of visiting area information having the number of storage update times that is larger than this average, and determine that the mobile communication terminal 1 is present at the midpoint of locations of the pieces of visiting area information thus extracted. With the above-described configuration, the mobile communication terminal 1 can determine the approximate location of the own terminal 1 in addition to the movement determination.

Referring to FIG. 6 herein, one example will be described. It is assumed that, out of the visiting area information history depicted in FIG. 6, the number of storage times for the visiting area information in the sector A is one, the number of storage times for the visiting area information in the sector B is two, the number of storage times for the visiting area information in the sector D is eight, the number of storage times for the visiting area information in the sector E is one, and the number of storage times for the visiting area information in the sector C is nine. The determination unit 16 extracts pieces of visiting area information having the number of storage times that is larger than the average of the storage times of the whole of the visiting area information history, i.e., 4.2, specifically the sector D and the sector C, and determines that the mobile communication terminal 1 is present at the midpoint between the sector D and the sector C.

The specific process execution unit 17 is specific process execution means for receiving the determination result from the determination unit 16 as an input and, in accordance with the determination result, executing a predetermined specific process. For example, when the mobile communication terminal 1 executing an application using location information by GPS positioning is determined to be stationary by the movement determination device, the GPS positioning will be stopped because there is no change in the location information and, when it is determined to be moving by the movement determination device, the GPS positioning will be resumed. The application using location information is, for example, for receiving a service delivering a weather forecast or town event information in accordance with locations of the mobile communication terminal 1 as described above. The specific process execution unit 17 receives the service by transmitting information indicating the location of the own terminal 1 obtained by the GPS positioning, for example, to a server of a service provider. As described above, the positioning is performed only when the mobile communication terminal 1 is determined to be moving, making it possible to reduce the power consumption attributed to the GPS positioning. Other specific examples of the specific process include music reproduction and activation of a wireless LAN.

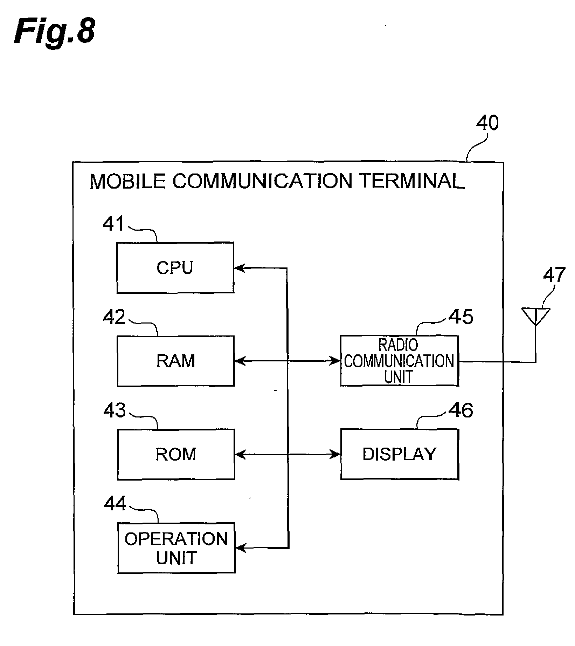

Subsequently, FIG. 8 illustrates a hardware structure of the mobile communication terminal 1 according to the present embodiment. As depicted in FIG. 8, the mobile communication terminal 1 is structured with a CPU 41, a RAM 42, a ROM 43, an operation unit 44, a radio communication unit 45, a display 46, an antenna 47, and other hardware. In addition, the mobile communication terminal 1 has components not depicted such as a voice processing unit, a speaker, and a microphone for functioning as a cellular phone, and also a GPS positioning unit, a music reproduction unit, and a wireless LAN connector. These components are connected via a bus in a manner such that various signals can be input/output. These components operate by a program or the like, whereby functions of the mobile communication terminal 1 being the movement determination device described above are exerted. In the present embodiment, the mobile communication terminal 1 is a cellular phone that can perform mobile communication.

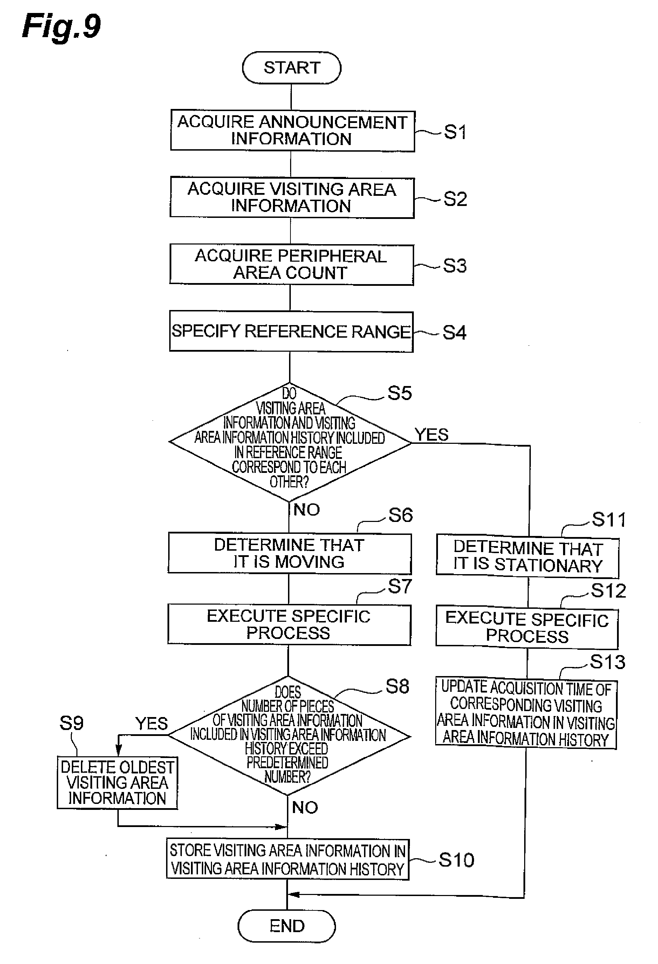

Subsequently, referring to a flowchart of FIG. 9, a procedure (movement determination method) performed by the movement determination device included in the mobile communication terminal 1 according to the present embodiment will be explained. This procedure is a procedure from a process in which the mobile communication terminal 1 acquires information for making a decision to a process in which it performs movement determination.

To begin with, announcement information is transmitted by the base station 21 to the announcement information receiving unit 11, and the announcement information receiving unit 11 receives the announcement information (S1). Subsequently, the visiting area information receiving unit 12 receives visiting area information transmitted by the base station 21 (S2, visiting area information acquisition step). At this time, the visiting area information acquisition unit 12 receives also visiting area information acquisition time transmitted by the base station 21.

Subsequently, the peripheral area count acquisition unit 13 acquires peripheral information transmitted by the base station 21, and information indicating a reception level and reception quality as communication quality of each peripheral sector constituting the peripheral information, and acquires the number of peripheral areas on the basis of these pieces of information (S3, peripheral area count acquisition step). It should be noted that the timing for acquiring the peripheral information and the reception level and the reception quality as the communication quality of each peripheral sector constituting the peripheral information may be the same as the timing for acquiring the visiting area information.

Subsequently, the reference range specifying unit 15 receives the number of peripheral sectors transmitted by the peripheral area count acquisition unit 13 and the visiting area information history transmitted by the storage unit 14. From the number of peripheral sectors and the visiting area information history thus received, the reference range specifying unit 15 specifies a reference range of the visiting area information history (S4, reference range specifying step).

Subsequently, the determination unit 16 receives the visiting area information transmitted by the visiting area information acquisition unit 12 and the reference range transmitted by the reference range specifying unit 15. From the visiting area information and the reference range thus received, the determination unit 16 compares the visiting area information and visiting area information included in the reference range to perform determination (S5, determination step). At S5, when they are determined not to correspond to each other, the determination unit 16 determines that the mobile communication terminal 1 is moving (S6, determination step). When the mobile communication terminal 1 is determined to be moving at S6, a specific process is executed by the specific process execution unit 17 (S7).

Subsequently to S7, from S8 to S10, by the storage unit 14, a process of storing the acquired visiting area information in the visiting area information history is performed. To begin with, the storage unit 14 determines whether the number of pieces of visiting area information included in the visiting area information history exceeds a predetermined number (S8) and, when it exceeds, deletes the oldest visiting area information included in the visiting area information history (S9). Subsequently to the case of not exceeding at S8, or subsequently to S9, the storage unit 14 stores the acquired visiting area information in the visiting area information history (S10, storage step), and then the entire movement determination procedure is completed.

At S5, when the mobile communication terminal 1 determines that they correspond to each other, the determination unit 16 determines that the mobile communication terminal 1 is stationary (S11, determination step). When the mobile communication terminal 1 is determined to be stationary at S11, a specific process is executed by the specific process execution unit 17 (S12). Subsequently to S12, the storage unit 14 updates the acquisition time relating to the visiting area information that was determined to correspond at S5 in the visiting area information history with the acquisition time acquired at S1 (S13), and the entire movement determination procedure is completed.

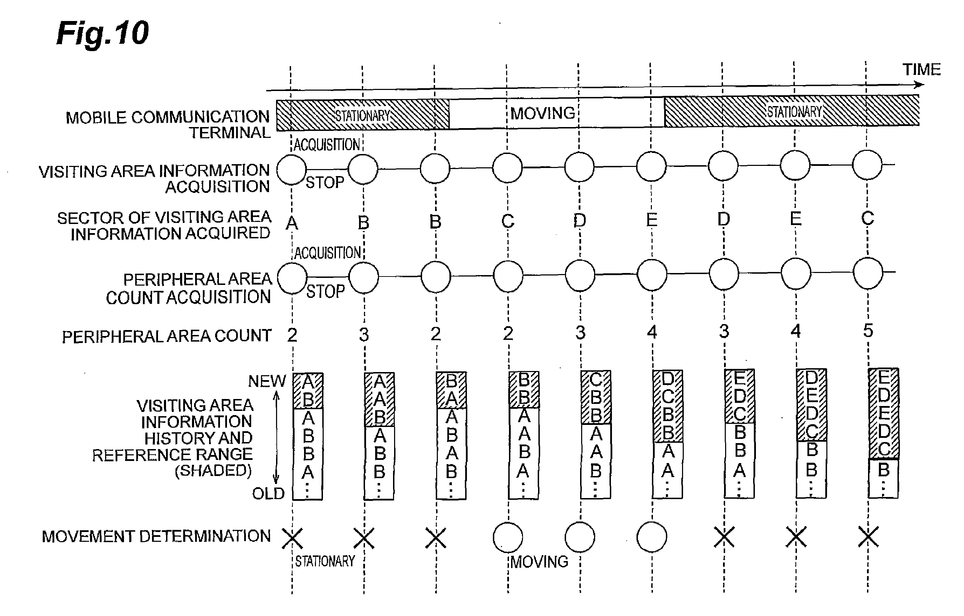

Next, referring to FIG. 10, processes of movement determination in the mobile communication terminal 1 will be explained with reference to specific examples. FIG. 10, as described with FIG. 2, illustrates operations of the mobile communication terminal 1 while a person carrying the mobile communication terminal 1 is moving from his/her home to the office on a time-series basis.

The first line of FIG. 10 represents the state of the mobile communication terminal 1. In other words, it indicates whether the mobile communication terminal 1 is moving or stationary. The mobile communication terminal 1 was initially stationary near the home, but starts moving from the home toward the office after a while, and is finally stationary near the office.

The second line of FIG. 10 represents the timing of acquisition of visiting area information by the visiting area information acquisition unit 12. In FIG. 10, the visiting area information acquisition unit 12 does not acquire the visiting area information regularly, but acquires it periodically, and stops acquisition for the remaining time period. Accordingly, it is possible to reduce the power consumption of the mobile communication terminal 1. Actual examples of the visiting area information acquisition unit 12 include an application CPU.

The third line of FIG. 10 represents visiting area information that the visiting area information acquisition unit 12 actually acquired (sector names, herein). It can be seen that the mobile communication terminal 1 was initially visiting the area near the home, and is finally visiting the area neat the office. It can be seen that, near the office, the mobile communication terminal 1 is present in a plurality of sectors, and the visiting area is frequently switching from one to another among the sectors.

The fourth line of FIG. 10 represents the acquisition timing of peripheral area count by the peripheral area count acquisition unit 13. In FIG. 10, the peripheral area count acquisition unit 13 does not acquire the peripheral area count regularly, but acquires the peripheral area count periodically, and stops acquisition for the remaining time period. Accordingly, it is possible to reduce the power consumption of the mobile communication terminal 1.

The fifth line of FIG. 10 represents the peripheral sector count that the peripheral area count acquisition unit 13 actually acquired. It can be seen that the mobile communication terminal 1 was initially present near the home where the peripheral sector count is small, and is finally present near the office where the peripheral sector count is large.

The sixth line of FIG. 10 represents the contents of the visiting area information history at each time point on a time-series basis, and simultaneously represents the reference range specified by the reference range specifying unit 15 as a shaded part. Pieces of visiting area information included in the visiting area information history line up in reverse chronological order of acquisition from top to bottom. Initially, the contents of the visiting area information history were ABABBA... and, because the visiting area information acquisition unit 12 acquired A as visiting area information in the first row of FIG. 10, in the second row of FIG. 10, this A was added to the visiting area information history at the top and the contents thereof became AABABB...

The seventh line of FIG. 10 represents the results of movement determination by the determination unit 16. The circles indicate that the determination unit 16 determined that the mobile communication terminal 1 was moving and the crosses indicate that the determination unit 16 determined that it was stationary. More specifically, the determination unit 16, in each row, on the basis of whether the sector of visiting area in the third line is included in the reference range in the sixth line or not, performs determination whether it is moving or not.

When comparing the movement state of the mobile communication terminal in the first line of FIG. 10 with the result of movement determination in the seventh line thereof, it can be seen that the movement determination device included in the mobile communication terminal 1 performs movement determination of the mobile communication terminal 1 accurately.

Here, when looking at the determination in the ninth row of FIG. 10, out of the visiting area information included in the visiting area information history, in the fifth place from the newer side, C being the same as the visiting area information acquired is present, and thus the determination unit 16 determined that the mobile communication terminal 1 was not moving. If the peripheral sector count in the fifth line were equal to or smaller than four instead of five, the mobile communication terminal 1 would have been determined to be moving even though it was not moving. In other words, by varying the reference range in accordance with the peripheral sector count, it is possible to perform such highly accurate movement determination.

As described above, according to the present embodiment, visiting area history information in the reference range in accordance with the number of sectors located at the periphery of the mobile communication terminal 1 movement of which is to be determined is compared with the visiting area sector at the present time, and movement determination is performed.

For example, when a user is in a situation from which the user can see many sectors in a downtown area such as Shibuya or Shinbashi (when peripheral sectors are relatively many), the above-described reference range is set wide. Accordingly, even if sector fluctuation occurs even though the mobile communication terminal 1 is not moving, it is possible to reduce errors of determining that the mobile communication terminal 1 was moving. On the other hand, when setting the reference range uniformly wider (for example, two hours (for five-minute interval data, 24 pieces of data)), in a suburb (when peripheral sectors are relatively few), a problem occurs as follows. The activity range of the user is completed within the above-mentioned sectors (for example, 24 sectors) and, even if the user moves between sectors, such a movement will be determined to be fluctuation. In other words, when the user is in the suburb (when peripheral sectors are relatively few), by setting the reference range narrower, it is possible to reduce the above-mentioned errors.

In other words, as described above, according to the present embodiment, it becomes possible to perform movement determination of the mobile communication terminal 1 using the visiting area information of communication areas with higher accuracy. In addition, because of this, it is possible to perform GPS positioning in accordance with movement determination only when necessary as described above. Thus, effective GPS positioning is enabled.

In addition, it is desirable to acquire and use acquisition time of the visiting area information as in the present embodiment. With this configuration, because even time can be added to information for making a decision, it is possible to perform movement determination with higher accuracy. It should be noted that acquiring the acquisition time is not necessarily required.

Alternatively, although the mobile communication terminal is assumed to be a cellular phone in the present embodiment, other than this, the mobile communication terminal may be a terminal that can perform mobile communication such as a personal computer (PC) or a personal digital assistance (PDA) having a mobile communication function.

Alternatively, although the movement determination device is assumed to be a mobile communication terminal movement of which is also to be determined in the present embodiment, it may be an entity (for example, a server on the mobile communication network that the mobile communication terminal connects with) other than the mobile communication terminal movement of which is to be determined. In this case, after acquiring information necessary for the determination from the mobile communication terminal movement of which is to be determined, movement determination is performed.

### Reference Signs List

1... mobile communication network, 2... sector, 21... base station, 3... network, 11... announcement information receiving unit, 12... visiting area information acquisition unit, 13... peripheral area count acquisition unit, 14... storage unit, 15... reference range specifying unit, 16... determination unit, 17... specific process execution unit, 40... mobile communication terminal, 41... CPU, 42... RAM, 43... ROM, 44... operation unit, 45... radio communication unit, 46... display, 47... antenna

## Claims

1. A movement determination device that determines whether a mobile communication terminal that performs mobile communication by visiting any one of a plurality of communication areas and performing radio communication is moving or not, the movement determination device comprising:
visiting area information acquisition means for acquiring visiting area information indicating the communication area that the mobile communication terminal is visiting;
storage means for storing the visiting area information acquired by the visiting area information acquisition means as a visiting area information history being a history of the communication area that the mobile communication terminal is visiting;
peripheral area count acquisition means for acquiring the number of peripheral areas indicating the number of the communication areas located at the periphery of the mobile communication terminal;
reference range specifying means for specifying a reference range of the visiting area information history stored by the storage means in accordance with the number of the peripheral areas acquired by the peripheral area count acquisition means; and
determination means for determining whether the mobile communication terminal is moving or not by comparing the visiting area information history stored by the storage means in the reference range specified by the reference range specifying means with the visiting area information acquired by the visiting area information acquisition means.

2. The movement determination device according to claim 1, wherein the visiting area information acquisition means acquires the visiting area information at regular time intervals.

3. The movement determination device according to claim 1 or 2, wherein the peripheral area count acquisition means acquires the number of the peripheral areas of each of the communication areas that satisfy certain communication quality.

4. The movement determination device according to any one of claims 1 to 3, further comprising specific process execution means for executing a predetermined process, after determining whether the mobile communication terminal is moving or not by the determination means, in accordance with the determination result.

5. The movement determination device according to any one of claims 1 to 4, wherein
the storage means, when storing the visiting area information as the visiting area information history, sets acquisition time when the visiting area information is acquired by the visiting area information acquisition means as visiting area information acquisition time,
when the visiting area information is not included in the visiting area information history, further stores therein the visiting area information and the visiting area information acquisition time, and
when the visiting area information is included in the visiting area information history, updates acquisition time of the corresponding visiting area information included in the visiting area information history with the visiting area information acquisition time, and
the reference range specifying means, based also on an interval of acquisition time of the visiting area information included in the visiting area information history, specifies the reference range of the visiting area information history stored by the storage means.

6. The movement determination device according to any one of claims 1 to 5, wherein
the storage means, when storing the visiting area information as the visiting area information history, further stores therein the number of storage times for each of the communication areas indicated by the visiting area information, and
the determination means extracts, out of the visiting area information included in the visiting area information history stored by the storage means in the reference range specified by the reference range specifying means, visiting area information in which the number of storage times that exceeds a predetermined ratio when compared with the number of storage times of whole of the visiting area information, and further determines that the mobile communication terminal is present at a location based on the visiting area information thus extracted.

7. The movement determination device according to any one of claims 1 to 6, wherein
the storage means further stores therein the number of peripheral areas acquired by the peripheral area count acquisition means as a peripheral area count history that is a history of the number of the communication areas located at the periphery of the mobile communication terminal, and
the reference range specifying means, in accordance with the peripheral area count history, specifies the reference range of the visiting area information history stored by the storage means.

8. A movement determination method for determining whether a mobile communication terminal that performs mobile communication by visiting any one of a plurality of communication areas and performing radio communication is moving or not, the movement determination method comprising:
a visiting area information acquisition step of acquiring visiting area information indicating the communication area that the mobile communication terminal is visiting;
a storage step of storing the visiting area information acquired at the visiting area information acquisition step as a visiting area information history being a history of the communication area that the mobile communication terminal is visiting;
a peripheral area count acquisition step of acquiring the number of peripheral areas indicating the number of the communication areas located at the periphery of the mobile communication terminal;
a reference range specifying step of specifying a reference range of the visiting area information history stored at the storage step in accordance with the number of the peripheral areas acquired at the peripheral area count acquisition step; and
a determination step of determining whether the mobile communication terminal is moving or not by comparing the visiting area information history stored at the storage step in the reference range specified at the reference range specifying step with the visiting area information acquired at the visiting area information acquisition step.
